# EUROPEAN PATENT APPLICATION

(11) **EP 1 233 330 A2**
(43) Date of publication of application: **21.08.2002**
(21) Application number: 02001373.6
(22) Date of filing: 19.01.2002
(51) Int. Cl.: G06F 3/033

(54) **Input system, program, and recording medium**

(30) Priority: 15.02.2001 JP 2001039091
(71) Applicant: Wacom Co., Ltd, Kitasaitama-Gun, 349-1148 Saitama-Ken (JP)
(72) Inventor: Kawasome, Toshiki, 1-12-19, Sumiyosi Souka-Shi, Saitama-Ken (JP)
(74) Representative: Paul, Dieter-Alfred, Dipl.-Ing.

(57) **Abstract**

When a computer system is operated using a pointing device, both hands are efficiently used to improve the operation efficiency. An input system includes an input device which is operated with the non-favored hand of an operator which is connected to a computer to which a mouse or a tablet as a pointing device which is operated with the favored hand of the operator is connected. While the computer system is executing an application program, an object on the screen of a display device is operated in response to an operation of the mouse or the tablet, the display magnification ratio of the screen is changed in response to the operation of a wheel operation section of the input device, the screen is scrolled in response to the operation of a ball operation section, and an input equivalent to an input when a keyboard is operated is made in response to the operation of a key switch section.

## Description

### BACKGROUND OF THE INVENTION

### 1. Field of the Invention

The present invention relates to an input system comprising a computer to which a pointing device and an input device formed as a device differing from this pointing device are connected, to a control program for this input system, and to a recording medium having the program stored thereon.

### 2. Description of the Related Art

Hitherto, as input devices for use in computers, pointing devices, such as mouses and tablets, for specifying a position on a display screen, have been popular. Most of the input operations performed using a keyboard in a conventional computer can be performed by using these pointing devices in combination with an OS (Operating System) which uses a GUI (Graphical User Interface).

However, in some keyboard operations, a plurality of keys must be pressed at the same time in order to perform special instructions. For example, in application programs executed by a computer, often, a setting has been made such that, when a plurality of specific keys of the keyboard are operated simultaneously, a specific process is performed. This operation of pressing a plurality of keys of the keyboard simultaneously makes it possible to instruct specific processes with one operation. This very convenient and widely-used operation is commonly known as a "shortcut key".

Operations, such as shortcut keys, can be quickly performed and are convenient, in particular, when the user is operating the keyboard with both hands. However, it is difficult to completely substitute all of functions by the operations of the pointing device. For this reason, even if pointing devices become prevalent, combining their use with the keyboard cannot be avoided.

For example, in a case where an application program for performing a drawing process in a computer is being run, while an operation related to drawing is performed using a pointing device, the keyboard can be operated to edit a file, to switch the screen, etc.

In this case, it is necessary that, while the pointing device is operated using the favored hand of the operator, the hand need to move away from the pointing device as necessary in order to operate the keyboard, and this is bothersome. However, when a complex operation, such as a shortcut key, is to be performed, it is difficult to handle the keyboard only with the hand which is not the favored hand of the operator, presenting the problem that it cannot help using the favored hand of the operator. For this reason, operation is inefficient because while the operator is using his/her favored hand, the other hand is idle.

### SUMMARY OF THE INVENTION

Accordingly, an object of the present invention is to allow operators to use their non-favored hand and to efficiently perform operations with simple manipulations when a computer is operated using a pointing device with the favored hand of an operator.

To solve the above-mentioned problems, the present invention has the following features. In the description to be given below, a construction corresponding to an embodiment is shown as one example by parentheses. The reference numerals, etc., are reference numerals in the drawings (to be described later).

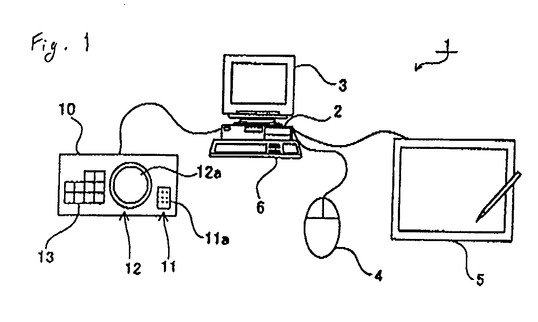

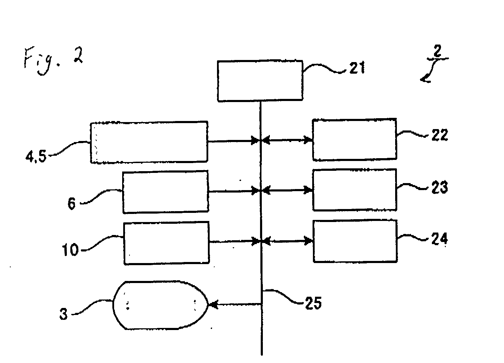

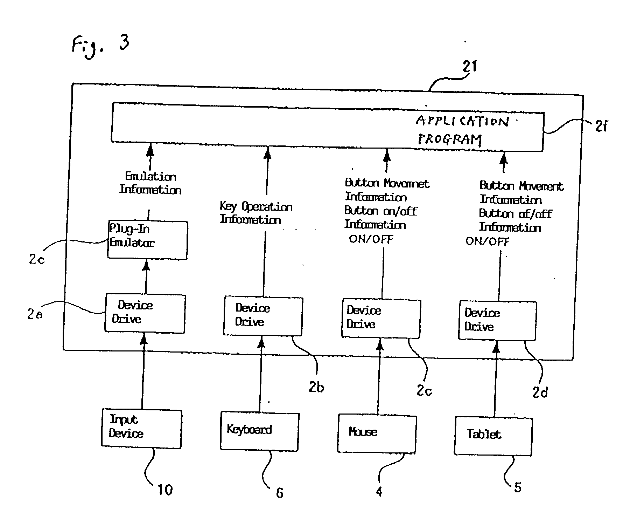

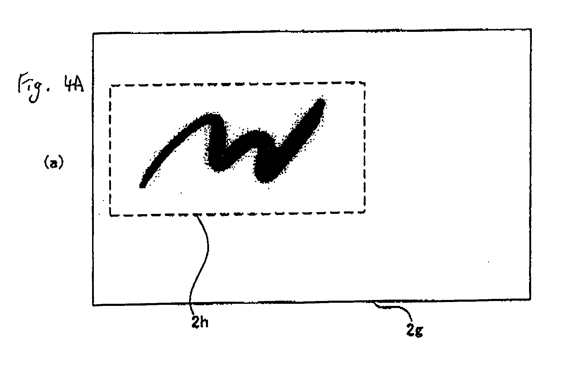

To achieve the above-mentioned object, according to a first aspect of the present invention, there is provided an input system (1) comprising: a first input device (a mouse 4 or a tablet 5 shown in Fig. 1) for specifying a position on a display screen, which is connected to a computer (2) for executing an application program (2f) and for displaying a processing object area (2g) of the application program on the display screen; a second input device (an input device 10 shown in Fig. 1) formed as a device differing from the first input device; and instruction means (a CPU 21 for executing a plug-in emulator 2e shown in Fig. 3) for instructing the changing of the display state of a processing object area on the display screen in response to an operation in the second input device.

Here, examples of the first input device include pointing devices, such as a mouse, a trackball, a touch pad, and a pen tablet. Of course, other well-known input devices can be used. Also, application programs include general application programs, such as drawing software and document creation software, as well as application programs for realizing some of the functions of the operating system. The second input device comprises, for example, an input device such as a scroll wheel, a trackball, a touch pad, and a key switch, and other well-known input devices. Furthermore, the computer may be configured in such a way that, in addition to the first and second input devices, well-known input devices, such as keyboards, are connected as third and fourth input devices.

According to the present invention, in the input system comprising a first input device for specifying a position on a display screen, which is connected to a computer for executing an application program and for displaying a processing object area of the application program on a display screen, the instruction means instructs the application program to change the display state of the processing object area on the display screen in response to an operation in the second input device formed as a device differing from the first input device, so that the display state of the processing object area is changed on the display screen at the time when the application program is being executed.

Therefore, it is possible for an operator to change the display state of the processing object area on the display screen in such a manner that while the first input device is being operated with one hand to specify a position on the display screen, the second input device is operated with the other hand. This makes it possible to effectively use both hands in cooperation and to efficiently perform operations. Furthermore, by using the second input device formed as a device differing from the first input device and the instruction means in combination, the display state of the processing object area can be changed with simple manipulations. Consequently, it is possible to efficiently assist an operation performed by the first input device and possible to effectively improve the operation efficiency.

More specifically, in a case where both an operation of specifying a position on the display screen and an operation for the processing object area are to be performed by the first input device, in addition to the number of operations being large, different operation contents must be switched and performed, causing the operation efficiency to be greatly decreased. According to the input system of the present invention, since different operation contents are performed with both hands in a shared manner, the operation efficiency and the ease of operation are improved considerably.

In addition, since the second input device is formed as a device differing from the first input device, the second input device can be disposed at a desired position away from the first input device, and operations can be performed smoothly while using both hands at a natural posture.

In one form of the input system of the present invention, the instruction means instructs the changing of the relative position of the processing object area displayed on the display screen in response to an operation in the second input device.

According to the invention, the instruction means may instruct the application program to change the relative position of the processing object area with respect to the display screen in response to an operation in the second input device. For example, in a case where the size of the processing object area is equal to or greater than the size of the display screen, when the relative position of the processing object area with respect to the display screen is changed, the processing object area is moved with respect to the display screen, and the range to be displayed is moved. Also, in a case where the processing object area is smaller than the display screen, the processing object area is moved on the display screen.

Therefore, it is possible for the operator to use both hands to simultaneously perform an operation of specifying a position on the display screen by the first input device and an operation of changing the relative position of the processing object area with respect to the display screen by the second input device.

More specifically, when the relative position of the processing object area with respect to the display screen is changed, the object for an operation by the first input device is moved, and the operator is forced to perform a complex operation. According to the present invention, while the first input device is operated with one hand, a process which supplements the operation by the first input device can be performed by the operation with the other hand. Since operations are performed efficiently by using both hands in cooperation, the operation efficiency and the ease of operation can be improved considerably.

In one form of the input system of the present invention, the instruction means instructs the changing of the display magnification ratio of the processing object area displayed on the display screen in response to an operation in the second input device.

According to the present invention, the instruction means may generate a signal for instructing an application program to change the display magnification ratio of the processing object area displayed on the display screen in response to an operation in the second input device. That is, the processing object area displayed on the display screen is enlarged or reduced, and is displayed.

Therefore, it is possible for the operator to use, for example, both hands to simultaneously perform an operation of specifying a position on the display screen by the first input device and an operation of changing the display magnification ratio of the processing object area on the display screen by the second input device.

When the display magnification ratio on the display screen is changed, the processing object area which is being displayed is enlarged or reduced, and in response to this, the range displayed within the processing object area is varied. Therefore, since the operation object of the first input device can be changed by changing the display magnification ratio with one hand while the position on the display screen is specified by the first input device with the other hand, the operation efficiency and the ease of operation can be improved considerably.

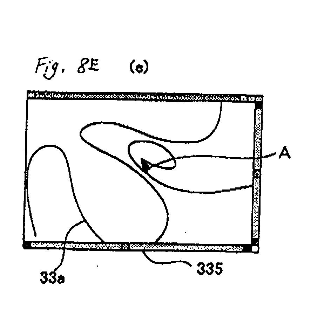

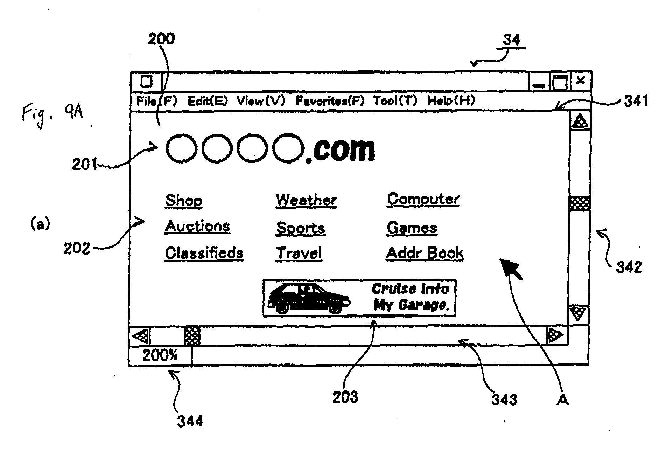

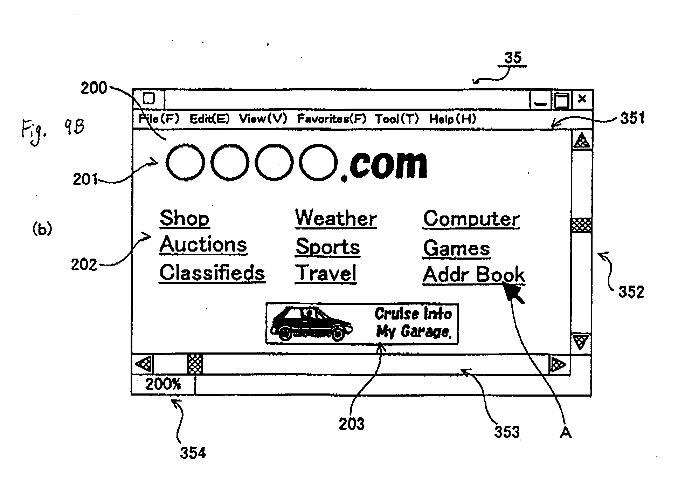

In one form of the input system of the present invention, the instruction means instructs the changing of the display size of an object (a character object 201 or 202 shown in Figs. 9A and 9B) contained in the processing object area.

According to the present invention, the instruction means instructs the changing of the display size of an object contained in the processing object area in response to an operation in the second input device. That is, the display size when the object contained in the processing object area is displayed on the display screen is changed.

Therefore, by operating the second input device, a process, such as the display size of the object itself contained in the processing object area being changed, for example, characters being displayed in a larger size so that these characters can easily be seen, can be performed. As a result, complicated processes which conventionally require a complex setting operation which is separate from the setting of the magnification ratio of the processing object area can be performed with simple and intuitive manipulations, and the ease of operation can be improved even more.

In one form of the input system of the present invention, the instruction means further instructs an editing process for the processing object area in response to an operation in the second input device.

Here, the editing process for the processing object area includes an editing process, such as cutting, copying, and pasting, related to an object within the processing object area, as well as an editing process, such as a process for storing and updating the state of the processing object area, related to the processing object area itself.

According to the present invention, in addition to a process of instructing the changing of the display state of the processing object area in response to an operation in the second input device, the instruction means may instruct an editing process for the processing object area in response to an operation in the second input device. As a result, in the application program, an editing process, such as cutting, copying, and pasting in the processing object area, or storage/updating, is performed.

Therefore, an editing process in the processing object area can easily be performed by operations in the second input device.

Conventionally, an editing process for the processing object area is often performed by key operations in the keyboard, and since some of editing processes are instructed to operate a plurality of keys of the keyboard at the same time, this is bothersome. According to the present invention, by operating the first input device with one hand while the second input device is operated with the other hand, a position on the display screen can be specified, and an editing process can be quickly performed continuously, making it possible to improve the operation efficiency even more. Furthermore, the effort required to pass the input device from one hand to the other can be eliminated, and the ease of operation and the operation efficiency can be improved.

Furthermore, since the keyboard is unnecessary, desk space can be used more effectively.

In one form of the input system of the present invention, the instruction means generates a signal compatible with the application program executed by the computer in order to provide an instruction corresponding to an operation in the second input device.

According to the present invention, the instruction means may provide an instruction corresponding to an operation in the second input device by generating a signal corresponding to an application program executed by the computer in response to an operation in the second input device. That is, the instruction means may generate a signal compatible with the application program executed by the computer, as a signal for providing an instruction corresponding to an operation in the second input device.

In a case where a plurality of different application programs can be executed in the computer, the instruction means may be constructed to generate a signal compatible with the application program which is being executed.

Therefore, in the input system according to the present invention, since a signal compatible with the application program executed by the computer is generated, the application program which is an object is not limited, and the input system can be widely used in general application programs. For this reason, since an expensive application program which is dedicated to the input system as described above needs not to be provided, an economical burden on the operator can be minimized, and a labor burden associated with the changing of the application program to be used does not occur. Furthermore, it is possible for the operator to use both hands effectively to perform an input operation in an application program which the operator is accustomed to using. As a result, a versatile and very useful input system can be provided.

According to a second aspect of the present invention, there is provided a program (plug-in emulator 2e) for causing a computer (2), to which a first input device (the mouse 4 or the tablet 5 shown in Fig. 1) for specifying a position on a display screen and a second input device (the input device 10) formed as a device differing from the first input device are connected, to execute a display state changing process for changing the display state of the processing object area on the display screen in response to an operation in the second input device. The computer executes an application program in accordance with instructions input from the first and second input devices and displays the processing object area of the application program (2f) on the display screen.

Here, examples of the first input device possessed by the computer include pointing devices, such as a mouse, a trackball, a touch pad, and a pen tablet. Of course, other well-known input devices can be used. Also, application programs include general application programs, such as drawing/image editing software and document creation software, as well as application programs for realizing some of the functions of the operating system. The second input device comprises, for example, an input device such as a scroll wheel, a trackball, a touch pad, or a key switch, and other well-known input devices. Furthermore, the construction may be formed in such a way that, in addition to the above-described first and second input devices, a well-known input device, such as a keyboard, is connected to the computer.

According to the present invention, the computer, to which a first input device for specifying a position on a display screen and a second input device formed as a device differing from the first input device are connected, which executes an application program in accordance with instructions input from the first and second input devices, and which displays the processing object area of the application program on the display screen, executes a display state changing process for changing the display state of the processing object area on the display screen in response to an operation in the second input device. As a result, processes, such as an enlargement, a reduction, and a movement, are performed on the processing object area of the application program on the display screen.

Therefore, it is possible for the operator to change the display state of the processing object area on the display screen by operating the first input device with one hand in order to specify a position on the display screen while operating the second input device with the other hand. As a result, both hands can be effectively used in cooperation, and an operation can be efficiently performed.

Also, by using the second input device formed as a device differing from the first input device and the instruction means in combination, the display state of the processing object area can be varied with a simple operation. For this reason, it is possible to efficiently assist the operation performed by the first input device and to effectively improve the operation efficiency.

More specifically, in a case where both the operation of specifying a position on the display screen and the operation for the processing object area are performed by the first input device, in addition to the number of operations being large, different operation contents must be switched and performed, and the operation efficiency is decreased greatly. According to the present invention, by performing different operation contents with both hands in a shared manner, the operation efficiency and the ease of operation are improved considerably, and the ease of operation of the application program can be improved.

In one form of the program of the present invention, the program further comprise the step of performing a process of changing the relative position of the processing object area with respect to the display screen in response to an operation in the second input device, as the display state changing process.

According to the present invention, in the display state changing process, the computer may change the relative position of the processing object area with respect to the display screen in response to an operation in the second input device. For example, when the size of the processing object area is equal to or larger than the size of the display screen, the relative position of the processing object area with respect to display screen is changed, the processing object area is moved with respect to the display screen, and the range displayed on the display screen is moved. When the size of the processing object area is smaller than the size of the display screen, the processing object area is moved on the display screen.

Therefore, it is possible for the operator to simultaneously perform the operation of specifying a position on the display screen by the first input device and the operation of changing the relative position of the processing object area with respect to the display screen by the second input device by using, for example, both hands. That is, if the relative position of the processing object area with respect to the display screen is changed, the object of the application by the first input device is moved, and the operator is forced to perform a complex operation. However, according to the present invention, while the first input device is being operated with one hand, a process which supplements the operation by the first input device can be performed by an operation with the other hand. Therefore, it is possible to efficiently perform an operation with both hands and to improve the operation efficiency and the ease of operation of the application program.

In one form of the program of the present invention, the program further comprises the step of performing a process of changing the display magnification ratio of the processing object area displayed on the display screen in response to an operation in the second input device as the display state changing process.

According to the present invention, in the display state changing process, the display magnification ratio of the processing object area displayed on the display screen may be changed by a computer in response to an operation in the second input device. That is, the processing object area displayed on the display screen is enlarged or reduced, and is displayed.

Therefore, it is possible for the operator to simultaneously perform the operation of specifying a position on the display screen by the first input device and the operation of changing the display magnification ratio of the processing object area on the display screen by the second input device by using, for example, both hands.

When the display magnification ratio on the display screen is changed, the processing object area which is being displayed is enlarged or reduced, and in response to this, the range which is displayed in the processing object area is also varied. Therefore, since, while a position on the display screen is specified by the first input device with one hand, the processing object of the first input device can be changed by changing the display magnification ratio with the other hand, both hands can be effectively used, and the operation efficiency and the ease of operation can be improved considerably.

In one form of the program of the present invention, the program further comprises the step of performing a process of changing the display size of an object (a character object 201 or 202 shown in Figs. 9A and 9B) contained in the processing object area in response to an operation in the second input device, as the display state changing process.

According to the present invention, in the display state changing process, the display size of an object contained in the processing object area may be changed by a computer in response to an operation in the second input device.

Therefore, by operating the second input device, a process, such as the display size of the object itself contained in the processing object area being changed, for example, characters being displayed in a larger size so that these characters can easily be seen., can be performed. As a result, complicated processes which conventionally require a complex setting operation separately from the setting of the magnification ratio of the processing object area can be performed with simple and intuitive manipulations, and the ease of operation can be improved even more.

In one form of the program of the present invention, the program further comprises the step of performing an editing process in the processing object area in response to an operation in the second input device, in addition to the display state changing process.

Here, the editing process for the processing object area includes an editing process, such as cutting, copying, and pasting, related to an object within the processing object area, as well as an editing process, such as a process for storing and updating the state of the processing object area, related to the processing object area itself.

According to the present invention, in addition to the display state changing process, an editing process for the processing object area may be performed by the operator in response to an operation in the second input device.

Therefore, the editing process in the processing object area can easily be performed by the operation in the second input device. Hitherto, an editing process for the processing object area is often performed by key operations in the keyboard, and some of editing processes are instructed to simultaneously operate a plurality of keys of the keyboard, and this is bothersome. According to the present invention, by operating the first input device with one hand and by operating the second input device with the other hand, a position on the display screen can be specified, and an editing process can be quickly performed continuously, making it possible to improve the operation efficiency even more. Furthermore, the effort required to pass the input device from one hand to the other can be eliminated, and the ease of operation and the operation efficiency of the application program can be improved.

In one form of the program of the present invention, in the display state changing process, a process of generating a signal compatible with the application program in response to an operation in the second input device is performed.

According to the present invention, in the display state changing process, a signal corresponding to the application program executed by the computer is generated by the computer in response to an operation in the second input device. That is, in the display state changing process, as a signal for causing a process corresponding to the operation in the second input device to be executed by the computer, a signal compatible with the application program executed by the computer is generated.

In a case where a plurality of different application programs can be executed in the computer, a signal compatible with the application program which is being executed may be generated in a display state changing process.

Therefore, the application program which is an object is not limited, and the program can be widely used for general application programs. As a result, since a dedicated, expensive application program needs not to be provided, an economical burden on the operator can be minimized, and a labor burden associated with the changing of the application program to be used does not occur. Furthermore, since it is possible for the operator to use both hands effectively to perform an input operation in an application program which the operator is accustomed to using, the operator can effectively use both hands in order to perform an input operation, and the operation efficiency can be improved considerably.

According to another aspect of the present invention, there is provided a recording medium having stored thereon a program.

By using the recording medium of the present invention in a computer, the same advantages as those offered by other aspects of the invention can be achieved.

Further objects, features and advantages of the present invention will become apparent from the following description of the preferred embodiments with reference to the attached drawings.

### BRIEF DESCRIPTION OF THE DRAWINGS

Fig. 1 shows the configuration of an input system 1 according to a first embodiment of the present invention;
Fig. 2 is a block diagram showing the internal construction of a computer 2 shown in Fig. 1;
Fig. 3 is a schematic view conceptually showing the operation of the input system 1 shown in Fig. 1;
Fig. 4, including Figs. 4A and 4B, shows an example of an application program 2f executed by the computer 2 shown in Fig. 1; Fig. 4A shows a processing object area 2g by the application program 2f and a display area 2h displayed on a display device 3 within the processing object area 2g; and Fig. 4B shows a drawing processing screen 31 on which the display area 2h shown in Fig. 4A is displayed;
Fig. 5 is a flowchart showing the operation when a plug-in emulator 2e is executed by a CPU 21 shown in Fig. 2;
Fig. 6 is a table showing examples of instruction signals generated in such a manner as to correspond to the keys provided in a key switch section 13 in the process of step S8 shown in Fig. 5;
Fig. 7, including Figs. 7A, 7B, 7C, and 7D, shows examples of a screen displayed on the display device 3 in such a manner as to correspond to a series of input operations in the input system 1 shown in Fig. 1, wherein Fig. 7A shows a drawing processing screen 321; Fig. 7B shows a drawing processing screen 322; Fig. 7C shows a drawing processing screen 323; and Fig. 7D shows a drawing processing screen 324;
Fig. 8, including Figs. 8A, 8B, 8C, 8D, and 8E, shows examples of a screen displayed on the display device 3 in such a manner as to correspond to a series of input operations in the input system 1 shown in Fig. 1, wherein Fig. 8A shows a drawing processing screen 331; Fig. 8B shows a drawing processing screen 332; Fig. 8C shows a drawing processing screen 333; Fig. 8D shows a drawing processing screen 334; and Fig. 8E shows a drawing processing screen 335; and
Fig. 9, including Figs. 9A and 9B, shows examples of a display screen in a case where Web browser software is executed by the computer 2 in the input system 1 according to a second embodiment of the present invention, wherein Fig. 9A shows a browser screen 34 as an example of the display screen in the initial state; and Fig. 9B shows a browser screen 35 on which the display size of character objects is changed.

### DESCRIPTION OF THE PREFERRED EMBODIMENTS

The preferred embodiments of the present invention will now be described below with reference to Fig. 1 to Figs. 9A and 9B.

### [First Embodiment]

Fig. 1 shows the configuration of an input system 1 according to a first embodiment of the present invention. The construction of the top surface of an input device 10 is shown.

As shown in Fig. 1, the input system 1 is constructed in such a way that the input device 10 is connected to a computer 2 to which a display device 3, a mouse 4, a tablet 5, and a keyboard 6 are connected. The mouse 4, the tablet 5, the keyboard 6, and the input device 10 are each connected to the computer 2 via interfaces conforming to standards such as USB (Universal Serial Bus), a serial interface, PS/2, etc. Usually, the mouse 4 and the tablet 5 are operated with the operator's favored hand, and the keyboard 6 is operated with both hands of the operator.

The mouse 4 and the tablet 5 may be connected to the computer 2 at the same time, but only one of them may be exclusively connected to the computer 2.

The display device 3 has a display screen such as a CRT (Cathode Ray Tube) or an LCD (Liquid Crystal Display), and displays various screens on the basis of display information input from a CPU 21 of the computer 2 (to be described later). The display device 3 is connected to the computer 2 via interfaces conforming to standards such as D-Sub, BNC (British National Connector), DVI (Digital Visual Interface), and DFP (Digital Flat Panel), and a signal input from the CPU 21 to the display device 3 may be either one of an analog signal and a digital signal.

The mouse 4 is an input device which is moved about a flat surface by an operation of the operator. When the mouse 4 is being operated by the operator, an operation signal indicating the direction of the movement and the amount of the movement thereof is generated, and this signal is output to the CPU 21 of the computer 2 (to be described later). Also, the mouse 4 has one or more buttons, and when a button is pressed, an operation signal corresponding to the operated button is generated and is output to the CPU 21.

Examples of the mouse 4 include a mechanical mouse having, on the bottom of the main body thereof, a ball and a rotary encoder (rotation detector) for detecting the direction of the rotation and the degree of the rotation of the ball, and an optical mouse for detecting the direction of the movement and the amount of the movement by causing an LED (Light Emitting Diode) provided on the bottom of the main body to emit light and by receiving the reflected light by a photodetector (light detection mechanism). In addition, other well-known mouses can be used.

The tablet 5 comprises, for example, a pen-type position indicator for specifying a position, and a flat-plate-shaped coordinate detector for detecting a position indicated by this position indicator. When the position indicator is moved on the coordinate detector by an operation of the operator and an arbitrary position is indicated, an operation signal indicating the position indicated by the coordinate indicator is generated and is output to the CPU 21 of the computer 2 (to be described later). Also, when the coordinate indicator has a button, an operation signal indicating a button operation is generated in such a manner as to correspond to the operation of the button and is output to the CPU 21.

The keyboard 6 has a plurality of key switches, such as, for example, numeric keys for numerals 0 to 9, character keys for letters of the alphabet, and various function keys such as an "Esc" key (Escape key), an "Alt" key (Alternate key), and a "Ctrl" key (Control key). When any one of the keys is pressed by the operator, the keyboard 6 generates an operation signal indicating the operated key, and outputs the signal to the CPU 21 of the computer 2 (to be described later). The types and the number of keys on the keyboard 6 are arbitrary.

The input device 10 comprises a wheel operation section 11, a ball operation section 12, and a key switch section 13.

The wheel operation section 11 comprises a wheel 11a in the shape of a ring which is rotatably fixed to the main unit of the input device 10, and a rotation detection section (not shown) for detecting the rotation of the wheel 11a. Then, each time the wheel operation section 11 is operated by the operator, the input device 10 generates an operation signal indicating the direction of the rotation of the wheel 11a, detected by the rotation detection section, and outputs the signal to the CPU 21 of the computer 2.

The ball operation section 12 comprises a ball 12a which is rotatably buried in an arbitrary direction into the main unit of the input device 10, and a rotation detection section (not shown) for detecting the direction of the rotation and the degree of the rotation of the ball 12a. When the ball operation section 12 is operated by the operator, the input device 10 generates an operation signal indicating the direction of the rotation and the degree of the rotation of the ball 12a, detected by the rotation detection section, and outputs the signal to the CPU 21.

Here, examples of the rotation detection section possessed by the ball operation section 12 include one for detecting the degree of the rotation of the ball 12a as the degree of the rotation in the horizontal direction and in the vertical direction.

Furthermore, the key switch section 13 comprises a plurality of key switches. When one of the key switches is pressed, the input device 10 generates an operation signal corresponding to the pressed key switch, and outputs the signal to the CPU 21.

Then, the input device 10 constructed as described above is operated with the operator's non-favored hand.

Fig. 2 is a block diagram showing the internal construction of the computer 2 shown in Fig. 1. Fig. 3 is a view conceptually showing the operation of the input system 1. The construction of the computer 2 will be described below with reference to Figs. 2 and 3.

As shown in Fig. 2, the computer 2 comprises a CPU (Central Processing Unit) 21, a ROM (Read Only Memory) 22, a RAM (Random Access Memory) 23, a storage device 24, and a bus 25. Also, the display device 3, the mouse 4, the tablet 5, the keyboard 6, and the input device 10 are connected to the bus 25 via the above-described various interfaces.

When the computer 2 is to be started, the CPU 21 reads a system program stored in the ROM 22 or the storage device 24, loads the program into the work area within the RAM 23 and executes it, so that each section of the computer 2 and each device connected to the computer 2 are reset to an initial state. Also, the CPU 21 determines whether or not each of the input devices of the mouse 4, the tablet 5, the keyboard 6, and the input device 10 is connected to the computer 2, reads and executes a device driver corresponding to the connected input device from among the device drivers 2a, 2b, 2c, and 2d (see Fig. 3) stored in the storage device 24, and waits for an input operation from each input device.

For example, when the CPU 21 detects that the mouse 4 is connected to the computer 2, the CPU 21 reads and executes the device driver 2c corresponding to the mouse 4, and waits for an input operation of the mouse 4. In a similar manner, when the tablet. 5 is connected to the computer 2, the CPU 21 executes the device driver 2d; when the keyboard 6 is connected, the CPU 21 executes the device driver 2b; and when the input device 10 is connected, the CPU 21 executes the device driver 2a, and waits for an input operation.

Then, when the mouse 4, the tablet 5, or the keyboard 6 is operated, the CPU 21 obtains input contents by the process of the device drivers 2c, 2d, or 2b which is being executed. Then, the CPU 21 reads and executes an application program 2f (see Fig. 3) stored in the storage device 24 in accordance with the obtained input contents.

Also, when the input device 10. is operated while the application program 2f is being executed, and an operation signal is input from the input device 10, the CPU 21 obtains input contents in the input device 10 by the process of the device driver 2a, and executes a plug-in emulator 2e (see Fig. 3) on the basis of the obtained input contents in order to create emulation information. When executing the application program 2f, a process based on the emulation information is performed.

Furthermore, When executing the application program 2f, the CPU 21 creates display information of the screen to be displayed on the display device 3, and outputs the display information to the display device 3, so that the screen associated with the application program 2f is displayed on the screen of the display device 3.

The ROM 22 is formed of a non-volatile semiconductor storage element, etc., and has stored therein system programs, etc., which are executed by the CPU 21, in a form readable by the CPU 21.

The RAM 23 forms a work area for temporarily holding programs processed by the CPU 21, and data associated with these programs, etc.

The storage device 24 comprises a storage medium (not shown) formed of a magnetic or optical recording medium, a semiconductor storage element, etc. Various programs executed by the CPU 21, data associated with these programs, etc., are stored in this storage medium (not shown) in a form readable by the CPU 21.

Examples of the storage medium include portable media such as CD-ROMs, and fixed media, such as hard disks. In addition, the storage medium may be a medium which is loaded into another computer connected to the computer 2 via a network and which can be accessed from the CPU 21 via the network.

Next, the operation of the input system 1 will be described.

Fig. 3 is a view conceptually showing the operation of the input system 1 with respect to an input operation of the mouse 4, the tablet 5, the keyboard 6, and the input device 10. All of the device drivers 2a, 2b, 2c, and 2d, the plug-in emulator 2e, and the application program 2f, shown in Fig. 3, are software executed by the CPU 21 by using the hardware resources of the input system 1.

Also, the plug-in emulator 2e is stored in the storage device 24 in such a manner as to correspond to the application program 2f. When there are a plurality of application programs, plug-in emulators corresponding to the respective application programs may be stored in the storage device 24.

As shown in Fig. 3, when one of the mouse 4, the tablet 5, the keyboard 6, and the input device 10 is operated, an operation signal is input to the CPU 21. The CPU 21 executes the device drivers 2a, 2b, 2c, and 2d, and the plug-in emulator 2e as appropriate in order to obtain the input contents from the input operation signal.

For example, the operation signal input from the mouse 4 is processed by the device driver 2c, and the input contents in the mouse 4 are obtained from the operation signal. Furthermore, the device driver 2c creates movement information of the pointer corresponding to the input contents of the mouse 4 and information about the presence or absence of a button operation, and a process by the application program 2f is performed on the basis of the created information.

Also, for example, the operation signal input from the tablet 5 is processed by the device driver 2d, and the input contents in the tablet 5 are obtained on the basis of the operation signal. Furthermore, the device driver 2d creates movement information of the pointer corresponding to the input contents of the tablet 5 and information about the presence or absence of a button operation, and, thereafter, a process by the application program 2f is performed on the basis of the created information.

Furthermore, the operation signal input to the CPU 21 from the keyboard 6 is processed by the device driver 2b, and the input contents in the. keyboard 6 are obtained on the basis of the operation signal. Furthermore, the device driver 2b creates information indicating the key operation in the keyboard 6, and a process by the application program 2f is performed on the basis of the created information.

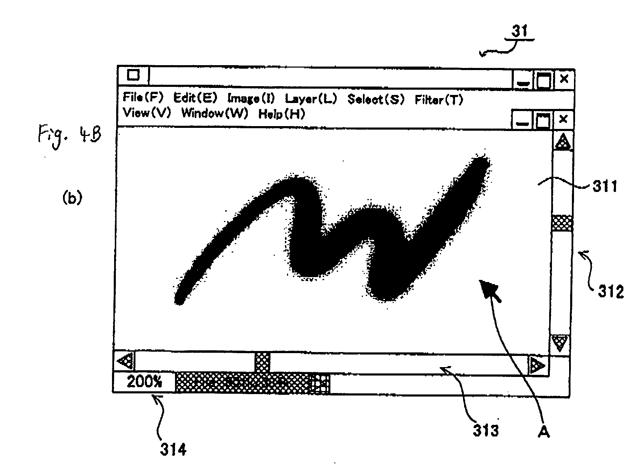

Here, referring to Figs. 4A and 4B, the application program 2f executed by the computer 2 will now be described. In this first embodiment, a description is given by using, as the application program 2f, an application program for performing a drawing process as an example.

Figs. 4A and 4B show drawing processing by the application program 2f. Fig. 4A shows a processing object area 2g as a processing object of the application program 2f and a display area 2h displayed on the display device 3 within the processing object area 2g. Fig. 4B shows a drawing processing screen 31 on which the display area 2h is displayed.

When the application program 2f is to be executed, the processing object area 2g such as that shown in Fig. 4A is set as an object to be subjected to a drawing process. It is possible for the operator to perform a drawing in the processing object area 2g by executing the application program 2f.

The size of the processing object area 2g differs depending on the setting state in the application program 2f, and is set in accordance with the circumstances at printing time, the circumstances from the viewpoint of data management, etc. As a result, the size does not necessarily match the maximum display area size by the display device 3.

In the example shown in Fig. 4A, since the processing object area 2g is larger than the displayable size of the display device 3, the display area 2h is set in the processing object area 2g. The display area 2h is an area displayed by the display device 3 within the processing object area 2g, and the size thereof is varied according to the resolution and the display magnification ratio of the display screen of the display device 3, the layout on the screen, etc.

The state in which the display area 2h in the processing object area 2g is displayed on the display device 3 is shown in Fig. 4B. A processing object display section 311 in which the display area 2h is displayed is disposed at substantially the center of the drawing processing screen 31 shown in Fig. 4B.

Also, on the drawing processing screen 31, a pointer A which is moved in response to an operation of one of the mouse 4 and the tablet 5, or both, is displayed.

The pointer A is moved and displayed on the screen in accordance with the pointer movement information created by the device drivers 2c and/or 2d when one of the mouse 4 and the tablet 5, or both, is operated. This pointer A indicates the position of the operation object by the operator. For example, when the mouse 4 or the tablet 5 is operated in a state in which the pointer A is displayed in such a manner as to overlap an icon, a process associated with that icon is performed.

Furthermore, in the drawing processing screen 31, a vertical-scroll operation section 312 is disposed along the right edge of the processing object display section 311, and a horizontal-scroll operation section 313 is disposed along the lower end of the processing object display section 311.

The vertical-scroll operation section 312 and the horizontal-scroll operation section 313 are commonly called "scroll bars", and indicate the position of the display area 2h in the processing object area 2g shown in Fig. 4A.

Then, the pointer A is moved to the vertical-scroll operation section 312 or the horizontal-scroll operation section 313 in accordance with the pointer movement information created by the device drivers 2c or 2d. Here, when the mouse 4 or the button of the tablet 5 is operated appropriately, the position of the display area 2h in the processing object area 2g varies.

For example, in a state in which the pointer A is positioned on the vertical-scroll operation section 312, when the button operation of the mouse 4 or the tablet 5 is performed, the display area 2h is moved in a vertical direction in the processing object area 2g, and the display in the processing object display section 311 is scrolled and displayed in the vertical direction. Also, when the button operation of the mouse 4 or the tablet 5 is performed in a state in which the pointer A is positioned on the horizontal-scroll operation section 313, the display area 2h is moved from side to side in the processing object area 2g, and the display in the processing object display section 311 is scrolled and displayed in the horizontal direction.

The process when the display area 2h is moved in the processing object area 2g as a result of the operation performed on the vertical-scroll operation section 312 and the horizontal-scroll operation section 313 differs depending on the specification of the application program 2f, and detailed processing procedures, etc., are not particularly limited. That is, the processing procedure of varying the position of the processing object area 2g with respect to the display area 2h or of varying the position of the display area 2h with respect to the processing object area 2g is a design-related matter which is determined by the algorithm inside the program, and differs depending on the specification of the application program 2f. The present invention can be applied regardless of the processing procedure as described above.

Also, a magnification-ratio display section 314 is disposed in the lower left corner of the drawing processing screen 31. In the magnification-ratio display section 314, the magnification ratio when the display area 2h is displayed in the processing object display section 311 is displayed.

The magnification ratio at which a display is made in the magnification-ratio display section 314, that is, the magnification ratio at which the display area 2h is displayed in the processing object display section 311, can be changed by the operator as desired. The higher this display magnification ratio is, the narrower the range in which the display area 2h occupies the processing object area 2g, and the lower the display magnification ratio is, the wider the range in which the display area 2h occupies the processing object area 2g. When the display area 2h becomes larger than the processing object area 2g as a result of the change of the display magnification ratio and the entirety of the processing object area 2g is displayed in the processing object display section 311, the portion outside the processing object area 2g is displayed as a blank space.

In the manner described above, when the application program 2f is executed, the drawing processing screen 31 shown in Fig. 4B is displayed by the display device 3, so that a drawing process in the processing object area 2g can be performed, and additionally, a scroll display of the processing object display section 311 on the basis of the movement of the display area 2h in the processing object area 2g and an increase or decrease of the display magnification ratio of the display area 2h in the processing object display section 311, are possible by the operation of one of the mouse 4 and the tablet 5, or both.

When an operation signal input from the keyboard 6 to the CPU 21 is processed by the device driver 2b, and the contents of the key operation in the keyboard 6 are created, various processing, such as an editing process for the object such as images and characters drawn in the processing object area 2g, and a storing process of storing the processing object area 2g as a file, are performed on the basis of the created information.

For example, when, in the keyboard 6, the "Ctrl" key and the "S" key are operated simultaneously, in the application program 2f, the processing object area 2g for the object of processing is saved as a file, or overwriting, wherein it is saved into the file which has already been created, is performed. Also, when the "Ctrl" key and the "S" key of the keyboard 6 are operated simultaneously, in the application program 2f, all the objects in the processing object area 2g are set to a selected state, so that an editing process, such as collective movement, collective deletion, and collective copying of all the objects, can be performed.

Furthermore, for example, when the "Ctrl" key and the "C" key of the keyboard 6 are operated simultaneously, the object in the selected state within the processing object area 2g is copied. When the "Ctrl" key and the "X" key of the keyboard 6 are operated simultaneously, the object in the selected state within the processing object area 2g is cut. When the "Ctrl" key and the "Y" key of the keyboard 6 are operated simultaneously, the object which has been copied or cut is pasted to a predetermined position within the processing object area 2g. Also, when the "Ctrl" key and the "Z" key of the keyboard 6 are operated simultaneously, the editing process which was performed immediately before is cancelled, and the state before that editing process is restored. When the "Ctrl" key and the "D" key of the keyboard 6 are operated simultaneously, a font selection process for the purpose of inputting characters is started. When the "Ctrl" key and the "N" key of the keyboard 6 are operated simultaneously, a new processing object area 2g is created as a processing object for the application program 2f. When the "Alt" key and the "Esc" key of the keyboard 6 are operated simultaneously, if a plurality of application programs, including the application program 2f, are being executed in the computer 2, the screen displayed on the display device 3 is changed from the screen of the application program 2f to the screen of another application program.

Then, with regard to the operation signal input from the input device 10 to the CPU 21, a process by the device driver 2a is performed, and next, a process by the plug-in emulator 2e is performed, so that emulation information compatible with the application program 2f is created.

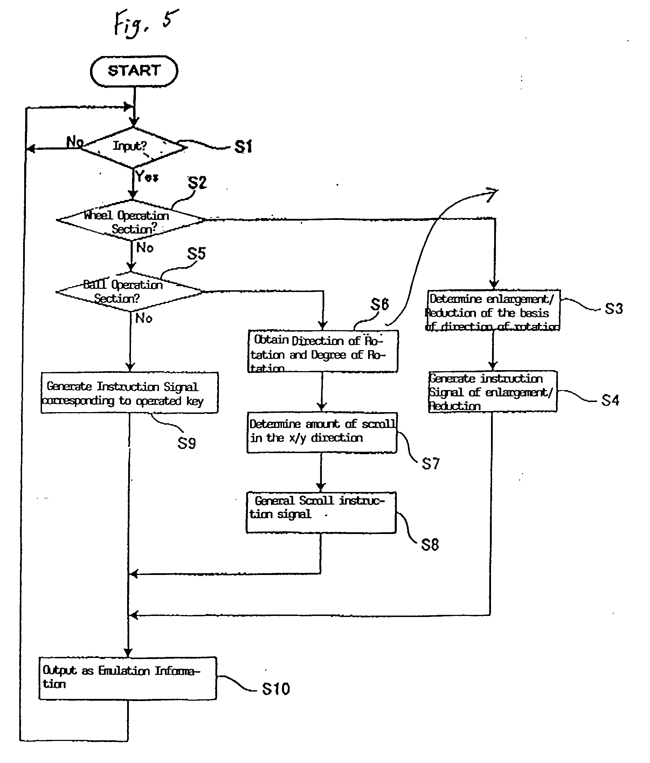

Here, the process of the plug-in emulator 2e will be described with reference to the flowchart in Fig. 5. Fig. 5 is a flowchart showing a process when the plug-in emulator 2e is executed by the CPU 21.

As shown in Fig. 5, when the plug-in emulator 2e is executed, first, the CPU 21 determines the presence or absence of an operation in the wheel operation section 11 of the input device 10 on the basis of the processing result by the device driver 2a (step S1).

Here, when the wheel operation section 11 is operated (Yes in step S1), based on the processing result of the device driver 2a, the CPU 21 determines whether the instruction by the operator is an enlargement or a reduction on the basis of the direction of the rotation of the wheel 11a possessed by the wheel operation section 11 (step S2).

More specifically, the CPU 21 extracts the detection result by the rotation detection section (not shown) on the basis of the result in which the operation signal input from the input device 10 is processed by the device driver 2a, and determines whether the direction in which the wheel 11a of the wheel operation section 11 has been rotated is the forward or the backward direction. Then, when the direction of the rotation of the wheel 11a is in the forward direction, it is determined that the operator has instructed an enlargement, and when the direction of the rotation of the wheel 11a is in the backward direction, it is determined that the operator has instructed a reduction.

Next, the CPU 21, in accordance with the instruction contents determined in step S2, generates an instruction signal instructing the application program 2f to enlarge or reduce the display in the processing object display section 311 (step S3), and the process proceeds to step S4.

In step S3, for example, a predetermined command for the application program 2f for instructing the enlargement/reduction of the display of the processing object display section 311 may be generated as an instruction signal. Alternatively, a signal equivalent to the case where a predetermined key operation is performed in the keyboard 6 may be generated, or a signal equivalent to the case at the operation time of another input device for instructing the enlargement/reduction of the display may be generated.

When the wheel operation section 11 is not operated (No in step S1), the CPU 21 does not perform the processes of steps S2 and S3, and the process directly proceeds to step S4.

In step S4, the CPU 21 determines whether or not the ball operation section 12 is operated. If the ball operation section 12 is operated (Yes in step S4), the CPU 21 obtains the direction of the rotation and the degree of the rotation of the ball 12a of the ball operation section 12 on the basis of the processing results by the device driver 2a (step S5).

Then, the CPU 21 determines the amount of scrolling in the X and the Y direction on the basis of the direction of the rotation and the degree of the rotation of the ball 12a (step S6), and generates an instruction signal instructing the application program 2f to scroll the display of the processing object display section 311 (step S7), and the process proceeds to step S8.

In step S7, for example, a predetermined command for the application program 2f for instructing the scrolling of the display of the processing object display section 311 may be generated as an instruction signal. Alternatively, a signal equivalent to the case where a predetermined key operation is performed in the keyboard 6 may be generated, or a signal equivalent to the case at the operation time of another input device for instructing the scrolling of the screen display may be generated.

On the other hand, when the ball operation section 12 is not operated in the input device 10 (No in step S5), the CPU 21 does not perform the processes of steps S5 to S7, and the process proceeds to step S8.

In step 38, the CPU 21 obtains the operation contents in the key switch section 13 on the basis of the processing results of the device driver 2a, and generates an instruction signal corresponding to the operated key in the key switch section 13, and the process proceeds to step S9.

In step S9, the CPU 21 creates emulation information in accordance with the instruction signals generated in steps S3, S7, and S9, outputs the information to the work area of the RAM 23, whereby the information is stored temporarily, and executes the application program 2f where appropriate, and the process returns to step S1.

In the manner described above, as a result of the plug-in emulator 2e being executed, in the wheel operation section 11 of the input device 10, when the wheel 11a is rotated in the forward direction, the display of the processing object display section 311 (Fig. 4B) is enlarged, and when the wheel 11a is rotated in the backward direction, that display is reduced. Also, in the ball operation section 12, when the ball 12a is rotated by an arbitrary amount in a desired direction, the display of the processing object display section 311 is scrolled on the basis of the direction of the rotation and the degree of the rotation. As a result, it is possible for the operator to change the display magnification ratio and to perform scrolling in the processing object display section 311 by operating the input device 10 with the operator's non-favored hand. That is, since an operation wherein the operator uses the mouse 4 and the tablet 5 with his/her favored hand can be supplemented by an operation of his/her non-favored hand, both hands can be used efficiently in cooperation to improve the operation efficiency.

Also, the emulation information created in step S9 may be instruction signals themselves generated in steps S3, S7, and S8, or new emulation information may be created from a plurality of instruction signals which satisfy specific conditions.

More specifically, in the operation of the plug-in emulator 2e shown in Fig. 5, even if a plurality of operation sections among the sections of the wheel operation section 11, the ball operation section 12, and the key switch section 13 are operated simultaneously, it is possible to obtain the operation contents thereof and to create the corresponding emulation information. Therefore, it is also possible to instruct the application program 2f to perform a special process in such a manner as to correspond to the simultaneous operations in the plurality of operation sections. For example, a special switching of the screen may be instructed in such a manner as to correspond to the simultaneous operations of a predetermined key of the key switch section 13 and the wheel 11a of the wheel operation section 11.

In this case, in the process shown in step S9 of Fig. 5, when the instruction signal generated in step S3 and the instruction signal generated in step S8 are a specific combination, specific emulation information may be created, and this information may be output to the application program 2f.

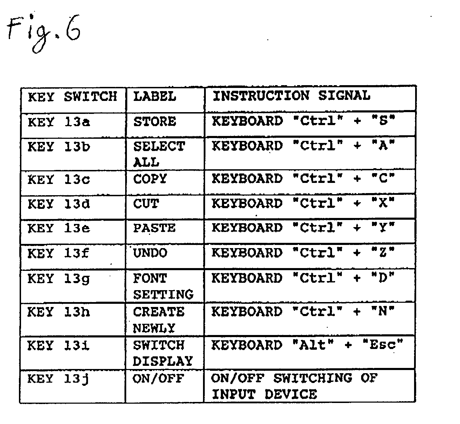

Fig. 6 is a table showing examples of instruction signals generated in such a manner as to correspond to the keys provided in the key switch section 13 in step S8 of Fig. 5. In Fig. 6, an example of the case in which 10 keys are disposed in the key switch section 13 is shown. Fig. 6 is only an example, and naturally the arrangement differs depending on the detailed construction of the input system 1 and the type of application program 2f.

As shown in Fig. 6, the key switch section 13 has 10 keys 13a, 13b, 13c, 13d, 13e, 13f, 13g, 13h, 13i, and 13j.

For the key 13a labeled as "Store", a setting has been made such that an instruction signal similar to that when the "Ctrl" key and the "S" key of the keyboard 6 are operated simultaneously is output.

Also, for the key 13b labeled as "Select All", a setting has been made such that an instruction signal similar to that when the "Ctrl" key and the "A" key of the keyboard 6 are operated simultaneously is output.

Similarly, for the key 13c labeled as "Copy", an instruction signal corresponding to the "Ctrl" key and the "C" key of the keyboard 6 is set. For the key 13d labeled as "Cut", an instruction signal corresponding to the simultaneous operation of the "Ctrl" key and the "X" key of the keyboard 6 is set. For the key 13e labeled as "Paste", an instruction signal corresponding to the simultaneous operation of the "Ctrl" key and the "Y" key of the keyboard 6 is set. For the key 13f labeled as "Undo", an instruction signal corresponding to the simultaneous operation of the "Ctrl" key and the "Z" key of the keyboard 6 is set. For the key 13g labeled as "Font Setting", an instruction signal corresponding to the simultaneous operation of the "Ctrl" key and the "D" key of the keyboard 6 is set. For the key 13h labeled as "Create Newly", an instruction signal corresponding to the simultaneous operation of the "Ctrl" key and the "N" key of the keyboard 6 is set. For the key 13i labeled as "Switch Display", an instruction signal corresponding to the simultaneous operation of the "Alt" key and the "Esc" key of the keyboard 6 is set. For the key 13j labeled as "On/Off", an instruction signal instructing On/Off of an input from the input device 10 is set.

Therefore, when, for example, the key 13a is operated, in the process shown in step S8 of Fig. 5, the instruction signal generated emulates the effect of simultaneously operating the "Ctrl" key and the "S" key of the keyboard 6. Emulation information is created in step S9 (Fig. 5) on the basis of this instruction signal, and a process by the application program 2f is performed.

More specifically, the operations of the keys 13a, 13b, 13c, 13d, 13e, 13f, 13g, 13h, and 13i are equivalent to the simultaneous operation of a plurality of keys possessed by the keyboard 6 while the application program 2f is being executed.

Consequently, if one of the keys 13a, 13b, 13c, 13d, 13e, 13f, 13g, 13h, and 13i is operated, an instruction input equivalent to the case where a plurality of keys is operated simultaneously in the keyboard 6 can be made. As a result, it is possible for the operator, by operating a key with the non-favored hand, to make an instruction input similar to the case where a plurality of keys of the keyboard 6 is operated simultaneously by using both hands.

In a case where the operator operates the keyboard 6 from the state in which the mouse 4 or the tablet 5 is being operated with the favored hand as in the conventional case, it is necessary to once move the favored hand away from the mouse 4 or the tablet 5. However, according to the present invention, by operating the key switch section 13 of the input device 10 with the non-favored hand, it is possible for the operator to perform an operation equivalent to the operation of the keyboard 6 without moving the favored hand away from the mouse 4 or the tablet 5. Furthermore, for the operation in the key switch section 13, since one key switch needs only to be pressed, that operation can easily be performed even with the non-favored hand, and there is no risk of a misoperation.

Also, the operation of the key 13j allows the switching of On/Off of the input device 10 to be instructed. Therefore, in the computer 2, while an application program which does not correspond to the operation of the input device 10, that is, in which the plug-in emulator 2e is not provided, is being executed, if the input device 10 is deactivated, misoperation can be prevented. Then, when the application program 2f in which the corresponding plug-in emulator 2e is provided is executed, if the key 13j is operated to switch the input device 10 to ON, thereafter, an operation using the input device 10 becomes possible.

In the example shown in Fig. 6, an instruction signal similar to that when the key of the keyboard 6 is operated is generated in such a manner as to correspond to the keys 13a, 13b, 13c, 13d, 13e, 13f, 13g, 13h, and 13i. However, the present invention is not limited to this, and a command specific to the application program 2f may be created. Furthermore, an instruction signal similar to that of the operation of one key of the keyboard 6, or three or more keys thereof may be generated, or an instruction signal corresponding to the operation of the mouse 4 or the tablet 5 may be generated. Furthermore, the key 13j may be disposed in the main unit of the input device 10 separately from the other keys.

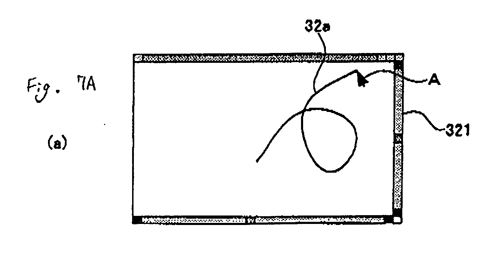

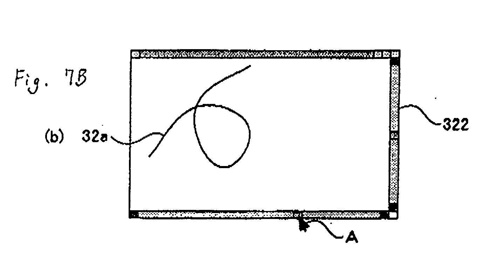

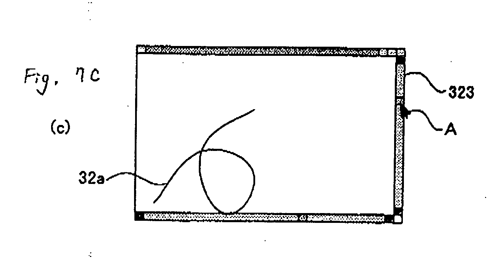

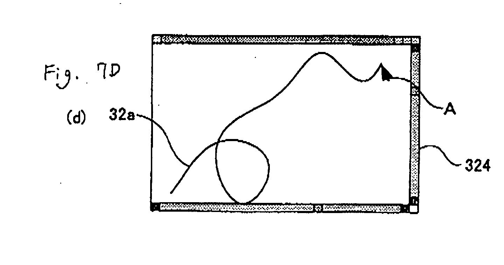

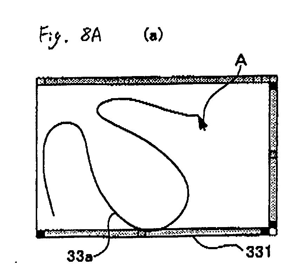

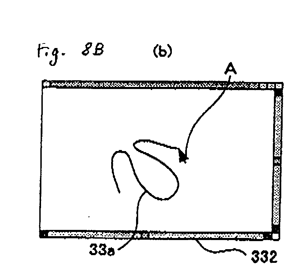

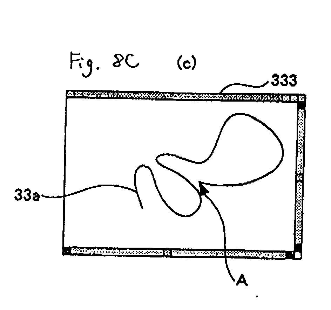

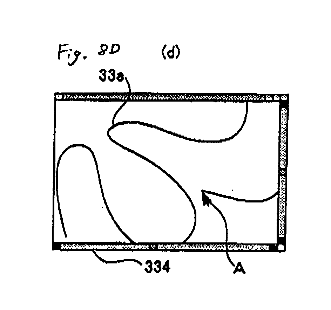

Figs. 7A, 7B, 7C, and 7D, and Figs. 8A, 8B, 8C, 8D, and 8E show examples of screens displayed on the display device 3 when the application program 2f is executed. Fig. 7A shows a drawing processing screen 321. Fig. 7B shows a drawing processing screen 322. Fig. 7C shows a drawing processing screen 323. Fig. 7D shows a drawing processing screen 324. Fig. 8A shows a drawing processing screen 331. Fig. 8B shows a drawing processing screen 332. Fig. 8C shows a drawing processing screen 333. Fig. 8D shows a drawing processing screen 334. Fig. 8E shows a drawing processing screen 335.

The drawing processing screen 321 shown in Fig. 7A is a screen in a state in which the application program 2f for performing a drawing process is being executed. On the drawing processing screen 321, the pointer A which is operated by one of the mouse 4 and the tablet 5, or both, is displayed, and furthermore, an object 32a is drawn by a pointer movement operation and a button operation using one of the mouse 4 and the tablet 5, or both.

On the drawing processing screen 322 shown in Fig. 7B, an object 32a displayed on the drawing processing screen 321 is moved to the left side of the screen.

When only the mouse 4 and the tablet 5 are used to perform an operation, in order to change the display state of the object 32a from the drawing processing screen 321 to the drawing processing screen 322, it is necessary to perform a button operation after the pointer A has been moved onto the scroll bar for instructing screen scrolling in the vertical direction, which is provided in the lower portion of the screen of the drawing processing screen 322. For this reason, even while drawing the object 32a, the pointer A must be moved away from the object 32a, and this is inefficient.

However, if the input device 10 is used, by rotating the ball 12a (Fig. 1) of the ball operation section 12, the object 32a can be moved without moving the pointer A

On the drawing processing screen 323 shown in Fig. 7C, the object 32a is moved further downward from the position displayed on the drawing processing screen 322.

In a case where only the mouse 4 and the tablet 5 are used to perform an operation, in order to change the display state of the object 32a from the drawing processing screen 322 to the drawing processing screen 323, a button operation must be performed after the pointer A is moved onto the scroll bar by which a vertical screen scroll is instructed in the vertical direction, which is provided on the right side of the screen of the drawing processing screen 322. However, if the input device 10 is used, by rotating the ball 12a, the object 32a can be moved without moving the pointer A.

On the drawing processing screen 324 shown in Fig. 7D, the pointer A is moved to the end point of the object 32a, and the object 32a is continuously drawn toward the left upper portion of the screen from the state shown in Figs. 7A to 7C.

More specifically, in a case where the object 32a shown in Fig. 7A is drawn and drawing is continued toward the right upper portion, it is necessary to move the object 32a toward the left side as shown on the drawing processing screen 322 of Fig. 7B, and furthermore, it is necessary to move the object 32a toward the lower portion as shown on the drawing processing screen 323 of Fig. 7C.

In a case where this series of movements of the object 32a is performed by using only the mouse 4 and the tablet 5, as described above, the pointer A must be moved away from the object 32a, and must be moved to the scroll bar in the lower portion of the screen and to the scroll bar on the right side of the screen in sequence. However, if the input device 10 is used, the object 32a can be moved by only rotating the ball 12a without performing the operation of moving the pointer A.

Therefore, since the operation related to the movement of the object 32a while the object 32a is being drawn can be sufficiently performed by using the input device 10 with the non-favored hand, the favored hand may be used exclusively to perform only the drawing operation of the object 32a. As a result, it is possible for the operator to quickly and smoothly perform an operation while both hands are used efficiently.

The drawing processing screen 331 shown in Fig. 8A is a screen in a state in which the application program 2f for executing a drawing process is being executed. On the drawing processing screen 331, the pointer A which is operated by one of the mouse 4 and the tablet 5, or both, is displayed, and the object 33a is drawn by the pointer movement operation and the button operation by one of the mouse 4 and the tablet 5, or both.

On the drawing processing screen 332 shown in Fig. 8B, the object 33a displayed on the drawing processing screen 331 is reduced and displayed.

In order to change the display state of the object 33a from the drawing processing screen 331 to the drawing processing screen 332, the display magnification ratio must be changed. Examples of this operation include an operation of moving the pointer A to the icon (not shown) for menu operation, and an operation of inputting a command for instructing the changing of the display magnification ratio by the key operation of the keyboard 6. In this case, the drawing of the object 33a must be stopped to move the pointer A, or the favored hand must be moved to the keyboard 6 in order to operate the keyboard 6. However, if the input device 10 is used, by rotating the wheel 11a (Fig. 1) possessed by the wheel operation section 11, the display magnification ratio can be changed.

Then, on the drawing processing screen 333 shown in Fig. 8C, the drawing of the object 33a is continued, and furthermore, on the drawing processing screen 334 shown in Fig. 8D, the object 33a is expanded even further and is displayed.

In order to change the display state of the object 33a from the drawing processing screen 333 to the drawing processing screen 334, the display magnification ratio must be changed, and, as described above, the operation of moving the pointer A and the operation of the keyboard 6 are required. However, if the input device 10 is used, by only rotating the wheel 11a, the display magnification ratio can be changed.

On the drawing processing screen 335 shown in Fig. 8E, drawing of the object 33a is continued from the state shown on the drawing processing screen 334 of Fig. 8D,

That is, when drawing is continued from the state shown on the drawing processing screen 331 of Fig. 8A to the state shown on the drawing processing screen 333 of Fig. 8C and then to the state shown on the drawing processing screen 335 of Fig. 8E, the display magnification ratio of the object 33a must be changed two times.

If the above-described operations are performed without using the input device 10, the following must be performed at least two times so that, in order to move the pointer A away from the object 33a, the mouse 4 and the tablet 5 are operated, and the favored hand is moved to the keyboard 6 to perform an operation. However, if the input device 10 is used, by operating the wheel 11a with the non-favored hand, the display magnification ratio can be changed without stopping the drawing of the object 33a with the favored hand.

Therefore, a series of operations from the state shown on the drawing processing screen 331 of Fig. 8A to the state shown on the drawing processing screen 335 of Fig. 8E can be quickly and easily performed by using both hands in cooperation.

In the above-described first embodiment, as input devices provided in the computer 2, the mouse 4, the tablet 5, the keyboard 6, and the input device 10 are used. However, the present invention is not limited to this construction, and, for example, other input devices, such as a touch panel in a notebook-sized computer, can be used. Furthermore, in place of the mouse 4, a mouse provided with a scroll wheel may be used. Furthermore, it is a matter of course that the detailed construction, such as the sizes of the wheel 11a and the ball 12a of the input device 10, and the number of keys of the key switch section 13, can be adjusted within the scope of the technological concept described in the claims.

In addition, although in the above-described first embodiment, the application program 2f is an application program for executing a drawing process, of course, other application programs can be used.

Here, an example in which an application program 2f other than for a drawing process will be described below as a second embodiment.

### [Second Embodiment]

Next, a second embodiment of the present invention will be described below. The second embodiment is such that, in the input system 1 in the first embodiment, an application program differing from a drawing process program is used as the application program 2f, and the construction excluding the application program 2f is the same. Accordingly, the illustrations and the descriptions of the construction in the second embodiment are omitted.

In this second embodiment, the application program 2f is a Web browser for displaying a Web page written by HTML (Hyper Text Markup Language), etc. The Web page displayed by the application program 2f may contain a program written by CGI (Common Gateway Interface), JAVA, etc.

According to a plug-in emulator 2e corresponding to the application program 2f as a Web browser, when the wheel 11a possessed by the wheel operation section 11 of the input device 10 is operated, an instruction signal indicating the changing of the character size during the Web page display time is generated according to the direction of the rotation of the wheel 11a, and this signal is output as an emulation signal to the application program 2f.

Here, examples of the operating states of the application program 2f are shown in Figs. 9A and 9B.

Figs. 9A and 9B show examples of a display screen in a case where the application program 2f as a Web browser is executed in the input system 1 according to a second embodiment of the present invention. Fig. 9A shows a browser screen 34 as an example of the display screen in the initial state. Fig. 9B shows a browser screen 35 in which the display size of character objects is changed.

When the application program 2f which is a Web browser is executed, the browser screen 34 shown in Fig. 9A is displayed in the display device 3. Here, for the object of processing of the application program 2f, a Web page 200 is shown, and on the browser screen 34, a part or the whole of the Web page 200 is displayed.

In substantially the center of the browser screen 34, a processing object display section 341 is disposed. Also, a vertical-scroll operation section 342 for scrolling the Web page 200 in the vertical direction in the processing object display section 341 is disposed on the right side of the processing object display section 341. Furthermore, a horizontal-scroll operation section 343 for scrolling the Web page 200 in the horizontal direction is disposed in the lower portion of the processing object display section 341. A magnification-ratio display section 344 for displaying the display magnification ratio of the Web page 200 in the processing object display section 341 is disposed in the left corner portion of the browser screen 34. On the browser screen 34, the pointer A which is operated by one of the mouse 4 and the tablet 5, or both, is displayed.

Therefore, on the browser screen 34, the pointer A can be moved to the vertical-scroll operation section 342 or the horizontal-scroll operation section 343 so that the Web page 200 within the processing object display section 341 is scrolled. It. is also possible to move the pointer. A as appropriate onto an icon (not shown) for the menu screen, so that the display magnification ratio displayed on the magnification-ratio display section 344 is changed.

In the Web page 200 displayed on the processing object. display section 341, character objects 201 and 202, and an image object 203 are contained. The character objects 201 and 202 are contained as text data in the Web page 200 written by HTML, and the image object 203 is set as image data.

Here, on the browser screen 34 shown in Fig. 9A, a case in which aprocess for expanding the character size when a display is made is performed is shown in Fig. 9B.

Fig. 9B shows a browser screen 35 in which the character size is expanded, and in substantially the center thereof, a processing object display section 351 is disposed. Also, on the right side of the processing object display section 351, a vertical-scroll operation section 352 for scrolling the Web page 200 in the vertical direction in the processing object display section 351 is disposed. Furthermore, in the lower portion of the processing object display section 351, a horizontal-scroll operation section 353 for scrolling the Web page 200 in the horizontal direction in the processing object display section 351 is disposed. Also, in the left corner portion of the browser screen 35, a magnification-ratio display section 354 for displaying the display magnification ratio of the Web page 200 in the processing object display section 351 is disposed.

On the browser screen 35, both the character objects 201 and 202 are displayed larger than those on the browser screen 34. However, in the Web page 200, the range in which they are displayed on the processing object display section 341 of the browser screen 34 is the same as the range in which they are displayed on the processing object display section 351 of the browser screen 35, and the sizes of image objects 203 are the same.

More specifically, the character size of the browser screen 34 and the browser screen 35 differs when the Web page 200 is displayed. In this case, the range in which the Web page 200 is displayed on the processing object display section 341 and the range in which the Web page 200 is displayed on the processing object display section 351 are not changed in a state in which the character objects 201 and 202 can be completely displayed. Also, the display magnification ratio at which the Web page 200 is displayed on the magnification-ratio display section 344 and the display magnification ratio at which the Web page 200 is displayed on the magnification-ratio display section 354 are the same.

In this second embodiment, as the plug-in emulator 2e corresponding to the application program 2f as a Web browser, software for generating an instruction signal for changing the character size in response to an operation of the wheel operation section 11 (Fig. 1) is used. Therefore, when the display state is switched from the browser screen 34 to the browser screen 35 while the application program 2f is being executed, the operator needs only to perform an operation for rotating the wheel 11a (Fig. 1).

In the computer 2 for executing a Web browser, usually, in order to select and specify a link embedded into a Web page, operations using pointing devices such as the mouse 4 and the tablet 5 are mainly performed. Here, in order to change the character size, it is necessary to operate an icon for menu operation, etc., by using a pointing device, and, usually, the operation must be stopped Also, a series of operations is performed with only the favored hand.

However, if the input device 10 is used, the character size can easily be changed by operating the wheel 11a of the wheel operation section 11. Consequently, the character size can be changed with the non-favored hand while operating the pointing device with the favored hand, and the operator can use both hands in cooperation in order to efficiently and smoothly perform an operation.

Although in the above-described second embodiment, the size of the character objects 201 and 202 during the display time of the Web page 200 is changed by the operation of the input device 10, the present invention is not limited to this. Of course, for example, the size of the image object 203 can also be changed at the same time.

While the present invention has been described with reference to what are presently considered to be the preferred embodiments, it is to be understood that the invention is not limited to the disclosed embodiments. On the contrary, the invention is intended to cover various modifications and equivalent arrangements included within the spirit and scope of the appended claims. The scope of the following claims is to be accorded the broadest interpretation so as to encompass all such modifications and equivalent structures and functions.

## Claims

1. An input system comprising:
a first input device for specifying a position on a display screen, which is connected a computer for executing an application program and for displaying a processing object area of the application program on the display screen;
a second input device formed as a device differing from said first input device; and
instruction means for instructing the changing of a display state of said processing object area on said display screen, in response to an operation in said second input device

2. An input system according to Claim 1, wherein said instruction means instructs the changing of a relative. position of said processing object area with respect to said display screen in response to an operation in said second input device.

3. An input system according to one of Claims 1 and 2, wherein said instruction means instructs the changing of a display magnification ratio of said processing object area displayed on the said display screen in response to an operation in said second input device.

4. An input system according to one of Claims 1 to 3, wherein said instruction means instructs the changing of a display size of an object contained in said processing object area in response to an operation in said second input device.

5. An input system according to one of Claims 1 to 4, wherein said instruction means further instructs an editing process for said processing object area in response to an operation in said second input device.

6. An input system according to one of Claims 1 to 5, wherein said instruction means generates a signal compatible with said application program executed by said computer in order to provide an instruction corresponding to an operation in said second input device.

7. A program for causing a computer, to which a first input device for specifying a position on a display screen and a second input device formed as a device differing from the first input device are connected, for executing an application program in accordance with instructions input from the first and second input devices and for displaying the processing object area of the application program on said display screen, to execute a display state changing process for changing the display state of said processing object area on said display screen in response to an operation in said second input device.

8. A program according to Claim 7, further comprising the step of performing a process containing a process of changing a relative position of said processing object area with respect to said display screen in response to an operation in said second input device, as said display state changing process.

9. A program according to one of Claims 7 and 8, further comprising the step of performing a process containing a process of changing the magnification ratio of said processing object area displayed on the said display screen in response to an operation in said second input device, as said display state changing process.

10. A program according to one of Claims 7 to 9, further comprising the step of performing a process of changing the display size of an object contained in said processing object area in response to an operation in said second input device, as said display state changing process.

11. A program according to one of Claims 7 to 10, further comprising the step of causing said computer to perform an editing process in said processing object area in response to an operation in said second input device, in addition to said display state changing process.

12. A program according to one of Claims 7 to 11, further comprising the step of performing a process of generating a signal compatible with said application program in response to an operation in said second input device in said display state changing process.

13. A recording medium having stored thereon a program according to one of Claims 7 to 12.
